# EUROPÄISCHE PATENTANMELDUNG

(11) **EP 0 806 404 A2**
(43) Veröffentlichungstag der Anmeldung: **12.11.1997**
(21) Anmeldenummer: 97105491.1
(22) Anmeldetag: 03.04.1997
(51) Int. Cl.: C05F 9/00

(54) **Verfahren zur Behandlung von Hausmüll oder hausmüllähnlichen Stoffen**

(30) Priorität: 11.05.1996 DE 19619159
(71) Anmelder: ML Entsorgungs- und Energieanlagen GmbH, D-40880 Ratingen (DE)
(72) Erfinder: Kirchgaesser, Peter, 50733 Köln (DE)
(74) Vertreter: Vomberg, Friedhelm, Dipl.-Phys.

(57) **Zusammenfassung**

Die Erfindung betrifft ein Verfahren zur Behandlung von Hausmüll oder hausmüllähnlichen Stoffen, aus denen durch Vorbehandlungen, wie Absieben, Zerkleinerung und Magnetabscheidung eine Feinfraktion-Phase gewonnen wird, die von Inertstoffen befreit einer anaeroben Behandlung unterzogen wird, bei der durch Hydrolyse und saure Gärung die in der Phase enthaltenden Metalle aus den Komplexverbindungen gelöst und in eine weitgehend ionisierte wasserlösliche Form überführt werden, und wobei die wässrige, die Schwermetalle in gelöster Form enthaltene Phase von dem Restschlamm abgetrennt und der Restschlamm einer Methanisierung zugeführt wird, woraus der aus dem Restschlamm durch Dekantieren gewonnene Gärschlamm erhalten wird, der durch externe Wärmezufuhr getrocknet und nach der Trocknung unmittelbar als Düngesubstrat verwertet wird.

## Beschreibung

Die Erfindung betrifft ein Verfahren zur Behandlung von Hausmüll oder hausmüllähnlichen Stoffen, aus denen durch Vorbehandlung, wie Zerkleinern, eine Feinfraktion-Phase gewonnen wird, die von Störstoffen befreit einer anaeroben Behandlung unterzogen wird, bei der durch Hydrolyse und saure Gärung die in der Phase enthaltenden Metalle aus den Komplexverbindungen gelöst und in eine weitgehend ionisierte wasserlösliche Form überführt werden, und wobei die wässrige, die Schwermetalle in gelöster Form enthaltene Phase von dem Restschlamm abgetrennt und der Restschlamm einer Methanisierung zugeführt wird, woraus der aus dem Restschlamm durch Dekantieren gewonnene Gärschlamm erhalten wird.

Ein solches Verfahren ist Gegenstand der älteren deutschen Patentanmeldung 196 13 373.4.

Zur Aufbereitung und thermischen Verwertung von Haus- bzw. Restmüll, Grobmüll und hausmüllähnlichem Gewerbemüll ist es nach dem Stand der Technik bekannt, zunächst eine Klassifizierung in einzelne Fraktionen vorzunehmen, was durch Zerkleinern und Sieben geschehen kann. Die heizwertreiche, von der Feinfraktion ≤ 40 mm befreite Restfraktion mit einer Partikelgröße bis zu 180 mm wird verbrannt, wobei die Verbrennungswärme nutzbar gemacht werden kann. Etwaige im Hausmüll (oder hausmüllähnlichen Mischungen) enthaltene magnetische Stoffe können durch Magnetabscheider entfernt und der Stahlindustrie zurückgeführt werden.

Die Feinfraktion, die neben Sand, Steinen, Glasanteilen auch Flüssigkeit, insbesondere nativ-organisches Material enthält, konnte bisher unmittelbar zur Deponierung bzw. zur Aufschüttung von Halden etc. verwendet werden. Ständig knapper werdender Deponieraum und schärfere Umweltschutzauflagen (z.B. TA Siedlungsabfall) führen dazu, daß die Entsorgung der Feinanteile kostspielig , bzw. ohne weitere Behandlung nicht mehr zulässig ist. Ein Verfahrensansatz ist, daß aus der Feinfraktion Inertstoffe ausgewaschen und damit entfernt werden. Diese Inertstoffe bestehen im wesentlichen aus Sand, Steinen und Glasbestandteilen. Sie sind als Mineralstoffe zur Weg- und Untergrundbefestigung gefahrlos verwertbar. Zurück bleibt ein organisch hochbelastetes, schwermetallhaltiges Abwasser, das aufgrund seiner Schadstoffkonzentration ein erhebliches Entsorgungsproblem bildet.

Um das organisch hoch belastete, schwermetallhaltige Abwasser so auf Vorfluterqualität zu reinigen, daß die organische Belastung entsprechend abgebaut und die Schwermetalle als Konzentrat für eine Entsorgung anfallen können, wird bei dem eingangs genannten Verfahren vorgeschlagen, die von Inertstoffen befreite Phase einer anaeroben Behandlung zu unterziehen, bei der durch Hydrolyse und saure Gärung die in der Phase enthaltenden Metalle, insbesondere Schwermetalle, aus organischen Komplexverbindungen gelöst und in eine weitgehend ionisierte wasserlösliche Form überführt werden, wonach die wässrige, die Schwermetalle in gelöster Form enthaltene Phase von dem Restschlamm abgetrennt und die Schwermetalle ausgefällt werden und schließlich der Restschlamm einer Methanisierung zugeführt wird. Die bei der Methanisierung gewonnenen Gase werden einem Blockkraftheizwerk zugeführt, wo die aus der Verbrennung gewonnene Energie zum Eigenbedarf der Vergärungsanlage nutzbar gemacht werden kann. Nach Abschluß der Methanisierung wird das sich über dem Gärschlamm bildende Wasser dekantiert und der verbleibende Gärschlamm mit einem maximalen Trockensubstanzgehalt von 35 % kompostiert. Diese anschließende Kompostierung zur Hygienisierung des Gärschlammes dauert in der Regel mehrere Wochen, z.B. 4 bis 8 Wochen, und beansprucht eine entsprechend große Kompostierungsfläche.

Ausgehend von dem vorbeschriebenen Verfahren ist es Aufgabe der vorliegenden Erfindung, die Gärschlammhygienisierung und -trocknung sowie den Gesamtplatzbedarf der Anlage zu minimieren.

Diese Aufgabe wird bei dem eingangs genannten Verfahren dadurch gelöst, daß der Gärschlamm durch externe Wärmezufuhr getrocknet und nach der Trocknung unmittelbar als Düngesubstrat verwertet wird. Die notwendige Energie kann beispielsweise aus der Verbrennung der gröberen heizwertreichen Fraktion oder von anderen Energiequellen entnommen werden. Der Trocknungsprozeß läßt sich zeitlich auf 30 bis 60 Minuten beschränken, wobei gegenüber der Kompostierung nicht nur Zeit, sondern auch Platz eingespart werden kann. Das nach Trocknung erhaltene Endprodukt, nämlich das Düngesubstrat ist ebenfalls hygienisiert und hat vorzugsweise einen komposttypischen Trockensubstanz-Gehalt von mindestens 50 % TS, vorzugsweise 50 bis 55 % TS. Ebenso wie das nach dem Stand der Technik erhaltene Fertigkompost-Material kann das getrocknete Endprodukt nach dem erfindungsgemäßen Verfahren entweder abgefüllt und als verkaufsfähiges Produkt weiterverwendet oder bis zum Verkauf zwischengelagert werden.

Nach einer Weiterbildung des erfindungsgemäßen Verfahrens wird zum Trocknen des Gärschlammes der Energiegehalt des aus der Methanisierung gewonnenen Gases genutzt. Vorzugsweise geschieht dies in der Art, daß das aus der Methanisierung erhaltene Gas in einem Blockheizkraftwerk verbrannt wird und daß die gewonnene Energie sowohl zur Energieversorgung der Vergärung bzw. der Vergärungsanlage als auch zum Trocknen verwendet wird, insbesondere zur Energieversorgung von Kontakt- oder Konvektionstrocknern. Die Energiebilanz einer Vergärungsanlage mit einem Jahresdurchsatz von 30000 Mg/a läßt Biogas mit einem Energiegehalt von ca. 2000 kW gewinnen, wovon im Blockheizkraftwerk 700 kW an elektrischer Energie und 1100 kW an thermische Energie nutzbar sind (die verbleibenden 200 kW sind unvermeidliche Energieverluste). Der Eigenbedarf der Vergärungsanlage beträgt 200 kW an elektrischer Energie sowie 200 kW an thermischer Energie, woraus sich ein Energieüberschuß von 500 kW elektrische Energie und 900 kW thermische Energie ergibt. Der vorgenannte Energieüberschuß läßt den Energiebedarf zur Trocknung des Gärschlammes von ca. 35 % TS auf ca. 55 % TS, der nur 50 kW elektrischer Energie und 850 kW an thermischer Energie erfordert, vollständig decken. Durch die Ausnutzung der Biogas-Energie läßt sich somit der weitere Vorteil erzielen, daß für die Weiterbehandlung des Gärschlammes keine Zusatzenergie von außen aufgewendet werden muß.

Die der Hydrolyse und der sauren Gärung sowie der anschließenden Methanisierung zugeführte Feinfraktion kann Partikelgrößen bis zu 70 mm enthalten, jedoch auch auf Partikelgrößen ≤40 mm beschränkt sein. Im Hinblick auf eine optimale Qualität des (getrockneten) Endproduktes werden vorzugsweise die in den Unteransprüchen 6 bis 10 beschriebenen Maßnahmen angewendet, die im folgenden kurz erläutert werden:

Nachdem aus der Feinfraktion Feststoffe, wie Sand, Steine und Glas, sedimentiert und aufschwimmfähige Feststoffe, wie Papier und Kunststoff, abgeschöpft worden sind, wodurch die ursprüngliche Feinfraktion von den Inertstoffen befreit wird, die ≥ 14 mm sind, wird die zurückbleibende wässrige Schlammlösung nach einer der Erfindung der Hydrolyse und sauren Gärung bei einem pH-Wert < 7,0 und vorzugsweise bei Temperaturen zwischen 35°C bis 65°C, bevorzugt 35°C bis 37°C oder 55°C bis 60°C, durchgeführt. Die pH-Wert-Einstellung ist erforderlich, um insbesondere Schwermetalle aus den organischen gelösten Komplexverbindungen zu befreien und in eine ionisierte wasserlösliche Form zu überführen, aus der z.B. durch Zugabe von Fällungsmitteln Schwefelsäure, Blei, Cadmium oder andere Metalle ausgefällt werden können und um gleichzeitig den Mikroorganismen optimale Lebensbedingungen zu schaffen. Die Temperatureinstellung dient zum einen dazu, die Löslichkeit zu erhöhen, zum anderen, um eine Hygienisierung sicherzustellen. Die wässrige Phase der Hydrolyse- und sauren Gärungsstufe kann diskontinuierlich oder kontinuierlich dekantiert werden und z.B. hiernach mit Fällungsmittel versetzt werden, nach deren Zugabe das metallsalz- und sonstige tonbestandteilhaltige Substrat ausgefällt und nach Filtration und Trocknung erhalten wird.

Der in die Methanisierung überführte Restschlamm, der von Inertstoffen sowie organischen gelösten Stoffen und Schwermetallen etc. befreit ist, wird durch Frischwasserzugabe bzw. Laugenzugabe auf einen pH-Wert von mindestens 6,5, vorzugsweise 7 bis maximal 7,5, angehoben. Das bei der Methanisierung entstehende Gasgemisch enthält im wesentlichen CH₄, CO₂ und H₂, die als Gase abgeführt werden.

Nach einer Weiterbildung der Erfindung wird das nach der Fällung erhaltene gereinigte Wasser zum Anmaischen der Feinfraktion und/oder als Frischwasser dem Restschlamm vor der Methanisierung zugeführt.

Das aus der Methanisierungsstufe sich über dem Gärschlamm bildende Wasser wird vorzugsweise dekantiert und dem Restschlamm, der in die Methanisierungsstufe eingegeben wird, zugegeben.

Zunächst werden aus der angelieferten Hausmüll- oder hausmüllähnlichen Fraktion die Inertstoffe, nämlich Steine, Sand, Glas als Sediment einerseits und aufschwimmfähige Feststoffe, wie Papier, Kunststoff etc. andererseits durch Waschen abgetrennt, so daß die verbleibende wässrige Lösung nur noch Partikel in Form von Schwebstoffteilchen <14 mm sowie gelöste Substanzen mit sich führt. Die wässrige Lösung wird zunächst konditioniert, d.h. auf Temperaturen zwischen 55°C bis 65°C, bevorzugt 35°C bis 37°C oder 55°C bis 60°C, und einen pH-Wert ≤7,0 eingestellt, bevor sie einer Hydrolyse und sauren Gärung unterzogen wird. Aus dieser Vergärungsstufe wird durch Dekantieren das die gelösten Schwermetalle sowie organischen Stoffe enthaltende Wasser abgetrennt, das anschließend einer Fällung unter Zugabe von Fällungsmitteln unterzogen wird. Die ausgefällten Stoffe werden als Sondermüll entsorgt, das verbleibende Wasser kann entweder einer Waschstufe oder dem Restschlamm zugegeben werden, der aus der Hydrolysestufe als Sediment abgezogen wird und der nach geeigneter Konditionierung einer Methanisierung zugeführt wird. Die bei der Methanisierung entstehenden Gase, im wesentlichen CH₄, CO₂ werden einem Blockheizkraftwerk zur Verbrennung zugeleitet. Die aus der Methanisierungsstufe abgezogene Phase besteht im wesentlichen aus Gärschlamm und Restwasser, das durch Dekantieren abgeschöpft wird, wobei der Trockensubstanzgehalt des Gärschlammes etwa 35 % TS beträgt. Dieser Gärschlamm wird anschließend auf Trocknungsgehalte von 50 bis 55 % TS durch Wärmezufuhr getrocknet, wobei die notwendige Energiemenge aus dem Blockheizkraftwerk, d.h. aus der Biogas-Verbrennung entnommen werden kann. Die Energie kann alternativ auch durch andere Energiequellen (Strom oder direkte Biogas-Verfeuerung) bereitgestellt werden. Da durch die aufgezeigte Vorbehandlung Schadstoffe, wie Metalle, insbesondere Schwermetalle, und andere organische Stoffe einschließlich dioxin- und furanhaltiger Stoffe, die durch Methanisierung austreibbar sind, vorher verfahrenstechnisch entfernt wurden, kann der getrocknete Gärschlamm unbedenklich als Düngesubstrat weiterverwendet werden.

## Patentansprüche

1. Verfahren zur Behandlung von Hausmüll oder hausmüllähnlichen Stoffen, aus denen durch Vorbehandlung, wie Zerkleinern, eine Feinfraktion-Phase gewonnen wird, die von Inertstoffen befreit einer anaeroben Behandlung unterzogen wird, bei der durch Hydrolyse und saure Gärung die in der Phase enthaltenden Metalle aus den Komplexverbindungen gelöst und in eine weitgehend ionisierte wasserlösliche Form überführt werden, und wobei die wässrige, die Metalle in gelöster Form enthaltene Phase von dem Restschlamm abgetrennt und der Restschlamm einer Methanisierung zugeführt wird, woraus der aus dem Restschlamm durch Dekantieren gewonnene Gärschlamm erhalten wird,
**dadurch gekennzeichnet**,
daß der Gärschlamm durch externe Wärmezufuhr getrocknet und nach der Trocknung unmittelbar als Düngesubstrat verwertet wird.

2. Verfahren nach Anspruch 1, dadurch gekennzeichnet, daß der Gärschlamm auf mindestens 50 % TS (Trockensubstanzgehalt), vorzugsweise 50 bis 55 % TS, getrocknet wird.

3. Verfahren nach Anspruch 1 oder 2, dadurch gekennzeichnet, daß zum Tocknen des Gärschlammes der Energiegehalt des aus der Methanisierung gewonnenen Gases genutzt wird.

4. Verfahren nach Anspruch 3, dadurch gekennzeichnet, daß das aus der Methanisierung erhaltene Gas in einem Blockheizkraftwerk verbrannt wird und daß die gewonnene Energie sowohl zur Energieversorgung der Vergärung bzw. der Vergärungsanlage als auch zum Trocknen verwendet wird, vorzugsweise zur Energieversorgung von Kontakt- oder Konvektionstrocknern.

5. Verfahren nach einem der Ansprüche 1 bis 4, dadurch gekennzeichnet, daß die Feinfraktion Partikelgrößen ≤70 mm enthält.

6. Verfahren nach einem der Ansprüche 1 bis 5, dadurch gekennzeichnet, daß die Hydrolyse und saure Gärung bei einem pH-Wert ≤7,0 durchgeführt werden.

7. Verfahren nach einem der Ansprüche 1 bis 6, dadurch gekennzeichnet, daß die Hydrolyse und saure Gärung bei Temperaturen zwischen 35°C bis 65°C, vorzugsweise 35°C bis 37°C oder 55°C bis 60°C, durchgeführt werden.

8. Verfahren nach einem der Ansprüche 1 bis 7, dadurch gekennzeichnet, daß die wässrige Phase der Hydrolyse und sauren Gärungsstufe dekantiert und durch Zugabe von Fällungsmitteln (Säuren), wie Ionenaustauschern, (Harzen) oder dergleichen ausgefällt und das Kondensat als Schadstoff abgezogen wird.

9. Verfahren nach einem der Ansprüche 1 bis 8, dadurch gekennzeichnet, daß der in die Methanisierung überführte Restschlamm auf einen pH-Wert von ≥6,5, vorzugsweise 7,0 bis maximal 7,5 eingestellt wird.

10. Verfahren nach einem der Ansprüche 1 bis 9, dadurch gekennzeichnet, daß das nach der Fällung erhaltene Wasser zum Anmaischen der Feinfraktion und/oder dem Restschlamm vor der Methanisierung (11) zugeführt wird.
